(19) **Europäisches Patentamt**

**European Patent Office**

**Office européen des brevets**

(11) **EP 1 023 411 B1**

(12) **FASCICULE DE BREVET EUROPEEN**

(45) Date de publication et mention
de la délivrance du brevet:
**03.09.2003 Bulletin 2003/36**

(21) Numéro de dépôt: **98946512.5**

(22) Date de dépôt: **28.09.1998**

(51) Int Cl.⁷: **C09D 133/06**, C09D 125/14

(86) Numéro de dépôt international:
**PCT/FR98/02071**

(87) Numéro de publication internationale:
**WO 99/018164 (15.04.1999 Gazette 1999/15)**

(54) **LIANT LATEX POUR COMPOSITION DE REVETEMENT**

LATEX-BINDEMITTEL FÜR BESCHICHTUNGSZUSAMMENSETZUNG

LATEX BINDER FOR COATING COMPOSITION

(84) Etats contractants désignés:
**AT BE CH CY DE DK ES FI FR GB GR IE IT LI LU
MC NL PT SE**

(30) Priorité: **06.10.1997 FR 9712429**

(43) Date de publication de la demande:
**02.08.2000 Bulletin 2000/31**

(73) Titulaire: **RHODIA CHIMIE
92408 Courbevoie Cédex (FR)**

(72) Inventeurs:
• **CHARMOT, Dominique
F-93310 Le Pré Saint Gervais (FR)**
• **BETT, William
F-75012 Paris (FR)**
• **GRANIER, Vincent
F-94300 Vincennes (FR)**

(74) Mandataire: **Fevrier, Murielle
Rhodia Services,
Direction de la Propriété Industrielle,
40, rue de la Haie-Coq
93306 Aubervilliers Cedex (FR)**

(56) Documents cités:
**EP-A- 0 522 456     EP-A- 0 653 469**

• **CHEMICAL ABSTRACTS, vol. 121, no. 10, 5
septembre 1994 Columbus, Ohio, US; abstract
no. 111546, XP002067044 & JP 06 049367 A
(KANSAI PAINT CO LTD, JAPAN)**
• **CHEMICAL ABSTRACTS, vol. 119, no. 20, 15
novembre 1993 Columbus, Ohio, US; abstract
no. 205599, XP002067045 & JP 05 105799 A
(MITSUI TOATSU CHEMICALS, JAPAN)**

Remarques:
Le dossier contient des informations techniques
présentées postérieurement au dépôt de la
demande et ne figurant pas dans le présent
fascicule.

**Description**

La présente invention a trait aux compositions aqueuses de revêtement, utilisées par exemple comme peintures à l'eau, et qui réticulent à température ambiante.

Les compositions de revêtement qui réticulent dans les conditions ambiantes sont connues de l'art antérieur. Les compositions les plus connues reposent sur les réactions entre époxydes et acides carboxyliques, entre les isocyanates et l'humidité, entre la polyaziridine et les acides carboxyliques, entre le méthylène activé et l'acide acrylique.

Les compositions mettant en oeuvre la réaction entre un époxyde et un acide carboxylique comprennent un liant qui est soit le mélange d'un latex à fonction acide carboxylique et d'un latex à fonction époxyde, soit un latex présentant à la fois ces deux fonctions, comme par exemple celui décrit dans EP-A-0 653 469.

Il a été observé que ces liants présentent une grande instabilité au stockage : les réactions de réticulation entre les deux fonctions acide et époxyde ont lieu lors de ce stockage, si bien que la fonction réactive du liant n'a pas lieu lors de l'utilisation du liant en tant que revêtement. Ceci crée un film aux mauvaises propriétés, présentant notamment une faible résistance chimique.

Un but de la présente invention est donc de proposer des compositions de revêtement à base d'un mélange de latex à fonctions acide carboxylique et époxy qui présentent une bonne tenue au stockage et une bonne réactivité au moment de leur utilisation.

Dans ces buts, l'invention concerne un liant pour composition de revêtement comportant :

- au moins un latex (A) préparé à partir de monomères éthyléniquement insaturés et présentant une fonction acide carboxylique, et
- au moins un latex (B) préparé à partir de monomères éthyléniquement insaturés et présentant une fonction époxyde,

et pour lequel la taille des particules desdits latex est d'au plus 50 nm.

L'invention concerne en outre une composition de revêtement à base d'un liant tel que défini ci-dessus.

D'autres détails et avantages de l'invention apparaîtront plus clairement à la lecture de la description et des exemples.

L'invention concerne donc tout d'abord un liant pour composition de revêtement comportant :

- au moins un latex (A) préparé à partir de monomères éthyléniquement insaturés et présentant une fonction acide carboxylique, et
- au moins un latex (B) préparé à partir de monomères éthyléniquement insaturés et présentant une fonction époxyde,

et pour lequel la taille des particules desdits latex est d'au plus 50 nm.

Par latex, on entend une dispersion aqueuse de particules de polymère.

Selon l'invention, le liant est un mélange de latex préparés à partir de monomères éthyléniquement insaturés. Ce mélange comprend au moins un latex présentant une fonction acide carboxylique et au moins un latex présentant une fonction époxyde. La caractéristique essentielle du liant selon l'invention est que les particules de ces latex présentant des fonctions acide carboxylique et époxyde ont une taille d'au plus 50 nm, de préférence comprise entre 20 et 40 nm. Par taille, on entend le diamètre des particules. Peu importe la répartition granulométrique des particules de chaque latex. Il est par contre essentiel que toutes les particules de latex présentent une taille d'au plus 50 nm : les plus grosses particules de latex ont donc une taille d'au plus 50 nm. La taille des particules est mesurée par microscopie électronique par transmission (MET).

De préférence, la masse moléculaire $\overline{M}s$ du polymère du latex (A), qui présente une fonction acide carboxylique, est comprise entre 40 000 et 500 000 g/mol, de préférence entre 100 000 et 400 000 g/mol.

Pour le latex (B), qui présente une fonction époxyde, la masse moléculaire $\overline{M}n$ est de préférence comprise entre 4000 et 50 000 g/mol, encore plus préférentiellement comprise entre 20 000 et 40 000 g/mol.

Ces masses moléculaires sont mesurées par gel-chromatographie (GPC).

En général, la température minimum de formation de film (TMFF) du polymère du latex (A), qui présente une fonction acide carboxylique, est comprise entre 0 et 15°C, de préférence entre 6 et 12°C, et celle du polymère du latex (B), qui présente une fonction époxyde, est comprise entre 30 et 50°C, de préférence entre 35 et 45°C.

En général, le latex (A), qui présente une fonction acide carboxylique, et le latex (B), qui présente une fonction époxyde, sont présents dans le liant dans un rapport "équimolaire", c'est-à-dire que les latex sont introduits en telles quantités que le mélange contient une fonction acide carboxylique pour une fonction époxyde.

Il a été observé que les résultats les meilleurs ont été obtenus lorsque les groupes époxyde du latex (B) sont situés à la surface des particules dudit latex. Il est ainsi préférable d'utiliser un latex (B) dont la majeure partie des fonctions époxydes se trouvent à la surface des particules de polymère.

Le liant selon l'invention est obtenu par simple mélange des latex (A) et (B).

Les latex (A) et (B) sont issus en général de la polymérisation de monomères éthyléniquement insaturés tels que :

- les esters (méth)acryliques dont le groupe alkyle comporte de 1 à 20 atomes de carbone tels que l'acrylate de méthyle, le méthacrylate de méthyle, l'acrylate d'éthyle, la méthacrylate d'éthyle, l'acrylate d'isopropyle, l'acrylate de butyle, la méthacrylate de butyle, le méthacrylate de 2-éthylhexyle, l'acrylate de décyle, le méthacrylate de lauryle, l'acrylate de benzyle,
- les vinyls aromatiques tels que le styrène, le vinyl toluène, l'alpha méthyl styrène

Le latex (A) est issu de la polymérisation d'au moins un desdits monomères éthyléniquement insaturés et d'au moins un monomère apportant la fonction acide carboxylique. En général, la fonction acide carboxylique provient d'un acide mono- ou polycarboxylique contenant une liaison polymérisable par molécule. En général, de tels acides contiennent 3 à 24 atomes de carbone et un ou deux groupes acide carboxylique par molécule. Il peut s'agir par exemple :

- des acides acrylique, méthacrylique, maléique, fumarique, itaconique, éthacrylique, crotonique, citraconique,
- des semi-esters d'acides dicarboxyliques dans lesquels le groupe alcool estérifié comprend 1 à 20 atomes de carbone tels que : le méthylhydrogénofumarate, le benzylhydrogénomaléate, l'octylhydrogénoitaconate, le dodécylhydrogénocitraconate et autres similaires.

Les acides carboxyliques préférés sont les acides acrylique et méthacrylique.

Les monomères apportant la fonction acide carboxylique représentent en général au moins 15 % en poids de la somme des monomères formant le polymère du latex (A).

Le latex (B) est issu de la polymérisation d'au moins un des monomères éthyléniquement insaturés précédents et d'au moins un monomère apportant la fonction époxyde. De préférence, la fonction époxyde provient d'un monomère (méth)acrylate de glycidyle. Un tel monomère peut être obtenu commercialement. Il peut être issu de la réaction d'estérification de l'acide acrylique ou méthacrylique avec le glycidol ou l'épichlorohydrine, suivie d'une déshydrohalogénation.

Les monomères apportant la fonction époxyde représentent généralement 10 à 40 % en poids de la somme des monomères formant le polymère du latex (B), de préférence 20 à 30 %.

Ces latex (A) et (B), qui présentent une taille de particules d'au plus 50 nm, peuvent être obtenus par les procédés classiques de polymérisation tels que par exemple celui décrit dans la demande EP-A-0 644 205 et notamment l'exemple 4 de cette demande. Il s'agit de polymérisation de monomères émulsifiés dans l'eau. De préférence, ces procédés sont mis en oeuvre en continu. Selon cet exemple 4, le latex est obtenu par préparation d'une solution aqueuse comprenant le tensio-actif et l'initiateur de polymérisation dans laquelle est introduite peu à peu et de manière continue le mélange de monomères.

Les tensio-actifs mis en oeuvre pour émulsifier les monomères sont notamment les tensioactifs anioniques.

Comme exemples de tensio-actifs anioniques pouvant être utilisés, on peut citer les sulfates d'alkyle de sodium et de potassium linéaires tels que le laurylsulfate de sodium, les sulfates d'alkylaryle de sodium, les sulfates et sulfonates des alkylphénols éthoxylés, les sulfates et sulfonates d'alcools gras éthoxylés, les sulfosuccinates.

Les masses moléculaires des latex (A) et (B) sont contrôlées par la quantité d'agent de transfert introduite au cours de la polymérisation.

Les quantités de tensio-actifs mis en oeuvre dans le procédé de polymérisation en émulsion varient entre 0,01 et 10 % en poids en général, et de préférence entre 0,2 et 5 % en poids par rapport au poids total de monomères et d'eau.

Il est possible d'orienter la polymérisation du latex (B) de manière à ce que la majorité des fonctions époxyde soient en surface des particules en mettant en oeuvre un procédé de polymérisation en continu - et non en batch - selon le procédé défini dans la demande EP-A-0 644 205 et notamment l'exemple 4 de cette demande.

Une caractéristique du liant selon l'invention est qu'il conduit à des revêtements présentant une unique température de transition vitreuse (Tg). Ceci prouve qu'il y a eu une bonne interaction entre les chaînes de polymères acide et époxyde et que le revêtement obtenu est homogène.

L'invention concerne également une composition de revêtement comportant des adjuvants usuels et le liant selon l'invention.

La composition peut contenir en plus du liant selon l'invention, n'importe quel liant utilisé dans les compositions de revêtement de ce type. On peut citer les latex acrylate, styrène/acrylate, les copolymères acétate, les dispersions aqueuses de polyuréthanne, de polyesters, d'époxy, d'alkydes et les résines polyuréthannes, époxy et alkydes. Ces liants peuvent remplacer jusqu'à 80 % en poids, de préférence jusqu'à 50 % en poids, du liant selon l'invention dans les compositions aqueuses de revêtement.

Destinées à être utilisées comme liants dans les peintures, les compositions aqueuses de revêtement selon la présente invention peuvent être appliquées sur un grand nombre de substrats pour former des films et revêtements qui réticulent et donnent des compositions thermodurcies à température ambiante ou plus élevée. Les températures de réticulation préférentielles varient entre 10 et 100°C.

Les compositions peuvent comporter comme adjuvants usuels : des épaississants, des antimousses, des glycols, des agents de coalescence, des pigments, des activateurs de base. Ces adjuvants représentent habituellement moins de 5 % en poids de solides présents dans la composition aqueuse finale.

Les compositions peuvent être appliquées sur tout type de substrat : bois, métal, béton, matière plastique, verre et similaires.

Les exemples qui suivent donnent une description plus détaillée de l'invention. Sauf indication contraire, les parties et les pourcentages sont donnés en poids.

**EXEMPLES**

**Exemple 1 - Synthèse d'un latex à fonction acide carboxylique de taille inférieure à 50 nm**

On introduit 2460 g d'eau épurée et 50,26 g de lauryl sulfate de sodium dans un réacteur à double enveloppe de 5 litres muni d'un agitateur mécanique, d'un condenseur et d'un système permettant d'avoir une atmosphère inerte ($N_2$) au dessus du milieu réactionnel. La température est portée à 85°C ± 1 °C.

On ajoute 2,38 g de peroxodisulfate d'ammonium afin d'amorcer la réaction.

Puis, sur 2 heures, on introduit le mélange de monomères de composition suivante :

- styrène          250 g
- acrylate de butyle          840 g
- acide méthacrylique          210 g

Pour compenser la forte exothermie et l'augmentation de viscosité, on effectue un ajout de 700 g d'eau épurée en parallèle à l'alimentation en monomères pendant la deuxième heure.

Lorsque l'ajout des monomeres et de l'eau est terminé, on introduit 2,9 g de peroxybenzoate de terbutyle. Puis, on alimente le réacteur pendant 1 heure avec une solution réductrice de 1,4 g d'acide erythorbique dans 50 g d'eau, en maintenant toujours la température à 85°C.

Le produit est enfin refroidi à température ambiante.

Le latex obtenu présente un extrait sec de 30 % en poids. La taille des particules est de 30 nm, mesurée par Microscopie Electronique par Transmission (MET).

La TMFF est de 10°C et la Tg calculée de -4°C.

La masse moléculaire $\overline{M}$s est de 200 000 g/mol.

**Exemple 2 - Synthèse d'un latex à fonction époxyde de taille intérieure à 50 nm**

On introduit 2560 g d'eau épurée et 48,5 g de lauryl sulfate de sodium dans un réacteur à double enveloppe de 5 litres muni d'un agitateur mécanique, d'un condenseur et d'un système permettant d'avoir une atmosphère inerte ($N_2$) au dessus du milieu réactionnel. La température est portée à 85°C ± 1 °C.

On ajoute 2,3 g de peroxodisulfate d'ammonium afin d'amorcer la réaction.

Puis, sur 2 heures, on introduit le mélange de monomères de composition suivante :

- styrène          661,5 g
- acrylate de butyle          351 g
- méthacrylate de glycidyle          337,5 g
- 3-méthyl mercaptopropionate          6,75 g

Pour compenser la forte exothermie, on effectue un ajout de 756 g d'eau épurée en parallèle à l'alimentation en monomères pendant la deuxième heure.

Lorsque l'ajout des monomères et de l'eau est terminé, on introduit 2,9 g de peroxybenzoate de terbutyle. Puis, on alimente le réacteur pendant 1 heure avec une solution réductrice de 1,4 g d'acide erythorbique dans 50 g d'eau, en maintenant toujours la température à 85°C.

Le produit est enfin refroidi à température ambiante.

Le latex obtenu présente un extrait sec de 30 % en poids. La taille des particules est comprise entre 35 et 40 nm, mesuré par MET.

La TMFF est de 39°C.

La masse moléculaire moyenne $\overline{M}$n est de 21 000 g/mol.

**Exemple 3 - Synthèse d'un latex à fonction acide carboxylique de taille supérieure à 50 nm**

Un latex à fonction acide est préparé par polymérisation en émulsion selon un procédé classique en faisant réagir à 80°C le mélange de monomères suivant :

- styrène        26,5 % en poids du mélange
- acrylate de butyle        63,5 %
- acide acrylique        5 %
- acide méthacrylique        5 %

Le latex à fonction acide obtenu présente une Tg de 2°C, mesurée par analyse enthalpique différentielle (DSC : "Differential Scanning Calorimetry").

La taille des particules est de 72 nm, mesurée par diffusion quasi élastique de la lumière (DQEL).

**Exemple 4 - Synthèse d'un latex à fonction époxyde de taille supérieure à 50 nm**

Un latex à fonction époxyde est préparé par polymérisation en émulsion selon un procédé classique en faisant réagir à 80°C le mélange de monomères suivant :

- styrène        48,5 % en poids du mélange
- acrylate de butyle        26 %
- méthacrylate de glycidyle        25 %
- 3-méthyl mercaptopropionate        0,5 %

Le latex à fonction acide obtenu présente une Tg de 40°C, mesurée par DSC.

La taille des particules est de 72 nm, mesurée par DQEL.

**Exemple 5 - Mélanges de latex époxyde et acide**

5.1. Taux de gonflement des films.

On réalise deux compositions de revêtement :

- une **composition 1** selon l'art antérieur par mélange :

    . d'un latex acide selon l'exemple 3, et
    . d'un latex époxyde selon l'exemple 4.

- une **composition 2** selon l'invention par mélange des deux latex obtenus selon les exemples 1 et 2.

On réalise ces compositions de revêtement en suivant la formulation suivante :

- 50 % de latex acide,
- 50 % de latex époxy.

Cette composition est utilisée pour recouvrir un carreau de faïence. On mesure à partir du film obtenu le taux de gonflement selon le protocole suivant.

Un morceau du film obtenu est pesé (masse M1) puis plongé dans la méthyléthylcétone pendant 24 heures. Après 24 heures d'immersion, l'échantillon est sorti du solvant, immédiatement pesé (masse M2) puis séché dans une étuve. Après 1 heure de séchage à 105°C, l'échantillon est pesé (masse M3). Le taux de gonflement est donné par la formule : (M2 - M3) X 100 / M3.

Les résultats sont donnés dans le tableau 1 :

Tableau 1

| Composition | Taux de gonflement | |
|---|---|---|
| | séchage 7 jours à 23°C et 55 % d'humidité relative | séchage 7 jours à 55 °C |
| 1 selon l'art antérieur | 1500 % | 1100 % |
| 2 selon l'invention | 1300 % | 360 % |

La composition 2 selon l'invention est plus réactive que la composition 1 : elle conduit à un film résistant qui gonfle peu en présence de solvant.

5.2. Mesure de l'homogénéité des vernis

On mesure les températures de transition vitreuse (Tg) des films issus du dépôt des compositions de revêtement 1 et 2 précédentes sur un carreau de faïence et après séchage 7 jours à 23°C et sous 55 % d'humidité relative.
La Tg est mesurée par Analyse Mécanique Dynamique (AMD) : il s'agit de la température correspondant au maximum du module de pertes E".
Pour la composition 1, on mesure deux Tg de 3 et 38°C, ce qui prouve qu'il y a eu peu d'interaction entre les deux latex dans le revêtement.
Pour la composition 2, on mesure une unique Tg de 25°C, ce qui prouve qu'il y a eu une bonne interaction des chaines de polymères acide et époxyde dans le revêtement.

5.3. Propriétés des vernis

Les compositions de revêtement 1 et 2 sont déposées sur des plaques d'acier QD36I sur une épaisseur sèche de 40 µm. Les films sont séchés 7 jours à 23°C sous 55 % d'humidité relative.
On a mesuré les propriétés de dureté et de résistance aux solvants.
La dureté est la dureté Persoz mesurée selon la norme NF T 30-016.
La résistance aux solvants est évaluée selon le protocole suivant : on frotte la plaque avec un tampon de coton imbibé de méthyléthylcétone. On compte le nombre d'aller-retour du tampon nécessaires pour enlever totalement le vernis en un point de la plaque au moins.
Les résultats sont rassemblés dans le tableau 2 :

Tableau 2

| Composition 1 selon l'art antérieur | Composition 2 selon l'invention |
|---|---|
| Dureté Persoz | |
| 62 | 214 |
| Résistance eaux solvants | |
| 45 | 174 |

On a également évalué la résistance chimique du revêtement obtenu à partir de la composition selon l'invention.
La résistance chimique est évaluée selon le test qui consiste à déposer 2 ml de produit à tester sur le revêtement puis à poser dessus un verre de montre pour éviter l'évaporation du liquide. Le liquide est laissé en contact avec le revêtement pendant 2 heures. Après 2 heures, on enlève le liquide et on note l'aspect visuel du film ( 0 = nul : vernis détérioré, 5 = bon : aucune marque laissée sur le vernis par le liquide).
Les résultats sont rassemblés dans le tableau 3.

Tableau 3

| Produit testé | Aspect du film |
|---|---|
| $CH_3COOH$ | 3 |
| $H_2SO_4$ | 5 |
| $NH_4OH$ | 4 |

Tableau 3  (suite)

| Produit testé | Aspect du film |
|---------------|----------------|
| EtOH | 3 |

**Revendications**

**1.** Liant pour composition de revêtement comportant :

- au moins un latex (A) préparé à partir de monomères éthyléniquement insaturés et présentant une fonction acide carboxylique, et
- au moins un latex (B) préparé à partir de monomères éthyléniquement insaturés et présentant une fonction époxyde,

**caractérisé en ce que** la taille des particules desdits latex est d'au plus 50 nm.

**2.** Liant selon la revendication 1, **caractérisé en ce que** la masse moléculaire $\overline{M}s$ du polymère du latex (A) présentant une (onction acide carboxylique est comprise entre 40000 et 500000 g/mol.

**3.** Liant selon la revendication 1 ou 2, **caractérisé en ce que** la masse moléculaire $\overline{M}n$ du polymère du latex (B) présentant une fonction époxyde est comprise entre 4000 et 50000 g/mol.

**4.** Liant selon l'une quelconque des revendications précédentes, **caractérisé en ce que** la TMFF du polymère du latex (A) présentant une fonction acide carboxylique est comprise entre 0 et 15°C.

**5.** Liant selon l'une quelconque des revendications précédentes, **caractérisé en ce que** la TMFF du polymère du latex (B) présentant une fonction époxyde est comprise entre 30 et 50°C.

**6.** Liant selon l'une quelconque des revendications précédentes, **caractérisé en ce que** le latex (A) présentant une fonction acide carboxylique et le latex (B) présentant une fonction époxyde sont présents dans un rapport "équimolaire".

**7.** Liant selon l'une quelconque des revendications précédentes, **caractérisé en ce que**, pour le latex (B) présentant une fonction époxyde, les groupes époxydes sont situés à la surface des particules dudit latex.

**8.** Liant selon l'une quelconque des revendications précédentes, **caractérisé en ce que** le latex (B) présentant une fonction époxyde est issu de la polymérisation de monomères à insaturation éthylénique et de (méth)acrylate de glycidyle.

**9.** Liant selon l'une quelconque des revendications précédentes, **caractérisé en ce qu'**il conduit à des revêtements présentant une unique température de transition vitreuse (Tg).

**10.** Composition de revêtement comportant des adjuvants usuels, **caractérisée en ce qu'**elle comprend le liant selon l'une des revendications 1 à 8.


**Patentansprüche**

**1.** Bindemittel für eine Überzugs-Zubereitung, umfassend:

- wenigstens einen Latex (A), hergestellt aus ethylenisch ungesättigten Monomeren und eine Carbonsäuregruppe aufweisend, und
- wenigstens einen Latex (B), hergestellt aus ethylenisch ungesättigten Monomeren und eine Epoxidgruppe aufweisend,

**dadurch gekennzeichnet, dass** die Größe der Latexteilchen nicht mehr als 50 nm beträgt.

**2.** Bindemittel gemäß Anspruch 1, **dadurch gekennzeichnet, dass** die molare Masse $\overline{M}$s des Latexpolymers (A), das eine Carbonsäuregruppe aufweist, zwischen 40000 und 500000 g/mol liegt.

**3.** Bindemittel gemäß Anspruch 1 oder 2, **dadurch gekennzeichnet, dass** die molare Masse $\overline{M}$n des Latexpolymers (B), das eine Epoxidgruppe aufweist, zwischen 4000 und 50000 g/mol liegt.

**4.** Bindemittel gemäß einem der vorhergehenden Ansprüche, **dadurch gekennzeichnet, dass** die TMFF des Latexpolymers (A), das eine Carbonsäuregruppe aufweist, zwischen 0 und 15°C liegt.

**5.** Bindemittel gemäß einem der vorhergehenden Ansprüche, **dadurch gekennzeichnet, dass** die TMFF des Latexpolymers (B), das eine Epoxidgruppe aufweist, zwischen 30 und 50°C liegt.

**6.** Bindemittel gemäß einem der vorhergehenden Ansprüche, **dadurch gekennzeichnet, dass** der Latex (A), der eine Carbonsäuregruppe aufweist, und der Latex (B), der eine Epoxidgruppe aufweist, in einem "äquimolaren" Verhältnis vorliegen.

**7.** Bindemittel gemäß einem der vorhergehenden Ansprüche, **dadurch gekennzeichnet, dass** für den Latex (B), der eine Epoxidgruppe aufweist, die Epoxidgruppen an der Oberfläche der Latexteilchen angeordnet sind.

**8.** Bindemittel gemäß einem der vorhergehenden Ansprüche, **dadurch gekennzeichnet, dass** der Latex (B), der eine Epoxidgruppe aufweist, aus der Polymerisation von ethylenisch ungesättigten Monomeren und Glycidyl(meth)acrylat hervorgegangen ist.

**9.** Bindemittel gemäß einem der vorhergehenden Ansprüche, **dadurch gekennzeichnet, dass** es zu Überzügen führt, die eine einzige Glasübergangstemperatur (Tg) aufweisen.

**10.** Überzugs-Zubereitung, die übliche Additive umfasst, **dadurch gekennzeichnet, dass** sie ein Bindemittel gemäß einem der Ansprüche 1 bis 8 umfasst.

**Claims**

**1.** A binder for a coating composition comprising:

- at least one latex (A) prepared from ethylenically unsaturated monomers and having a carboxylic acid function, and
- at least one latex (B) prepared from ethylenically unsaturated monomers and having an epoxy function,

  **characterised in that** the size of the particles of said latexes is at most 50 nm.

**2.** A binder according to claim 1 **characterised in that** the molecular mass $\overline{M}$s of the polymer of the latex (A) having a carboxylic acid function is between 40,000 and 500,000 g/mol.

**3.** A binder according to claim 1 or claim 2 **characterised in that** the molecular mass $\overline{M}$n of the polymer of the latex (B) having an epoxy function is between 4,000 and 50,000 g/mol.

**4.** A binder according to any one of the preceding claims **characterised in that** MEET of the polymer of the latex (A) having a carboxylic acid function is between 0 and 15°C.

**5.** A binder according to any one of the preceding claims **characterised in that** MFFT of the polymer of the latex (B) having an epoxy function is between 30 and 50°C.

**6.** A binder according to any one of the preceding claims **characterised in that** the latex (A) having a carboxylic acid function and the latex (B) having an epoxy function are present in an equimolar ratio.

**7.** A binder according to any one of the preceding claims **characterised in that**, for the latex (B) having an epoxy function, the epoxy groups are disposed at the surface of the particles of said latex.

8. A binder according to any one of the preceding claims **characterised in that** the latex (B) having an epoxy function results from polymerisation of monomers with ethylenic unsaturation and glycidyl (meth)acrylate.

9. A binder according to any one of the preceding claims **characterised in that** it results in coatings having a single glass transition temperature (Tg).

10. A coating composition comprising usual additives **characterised in that** it comprises the binder according to one of claims 1 to 8.